# EUROPÄISCHE PATENTANMELDUNG

(11) **EP 1 637 379 A2**
(43) Veröffentlichungstag der Anmeldung: **22.03.2006**
(21) Anmeldenummer: 05017716.1
(22) Anmeldetag: 16.08.2005
(51) Int. Cl.: B60J 7/16, B62D 33/02

(54) **Hubvorrichtung für das Dach eines Nutzfahrzeugaufbaus**

(30) Priorität: 20.09.2004 DE 202004014743 U
(71) Anmelder: F. HESTERBERG & SÖHNE GmbH & Co. KG, 58256 Ennepetal (DE)
(72) Erfinder: Bosch, Heiko, 58339 Breckerfeld (DE)
(74) Vertreter: Spannagel, Hans-Achim

(57) **Zusammenfassung**

Vorrichtung zum Heben und Senken eines insbesondere auf Eckrungen abgestützten Daches eines Nutzfahrzeugaufbaus, mit einer am oberen Ende der zugehörigen Runge befestigten senkrechten Führung, in der ein mit einem Dämpfungsglied zusammenwirkendes Hubglied mit Dachanbindung auf und ab beweglich geführt ist, wobei ein mechanischer Antrieb (1) im unteren Rungenbereich vorgesehen und mit dem Hubglied mittel- oder unmittelbar verbunden ist sowie zumindest Teile des mechanischen Antriebes aus einer eine Grundstellung bildenden Anheb-/Absenkposition in mindestens eine zusätzliche Anhebposition verlagerbar sind.

## Beschreibung

Die Erfindung betrifft eine Vorrichtung zum Heben und Senken eines insbesondere auf Eckrungen abgestützten Dachs eines Nutzfahrzeugaufbaus.

Eine derartige mechanische Vorrichtung ist der DE-C 198 42 844 zu entnehmen. Die Vorrichtung ist als Einzelantrieb zum Anbringen an einer Eckrunge ausgebildet und weist einen zwischen einem Hubglied und einer Abstützung im unteren Bereich der Runge wirkenden mechanischen Antrieb zum Auf- und Abbewegen des Hubgliedes auf. Der mechanische Antrieb kann aus einer Gewindestange und einer darauf sitzenden Mutter bestehen, die mittels einer ein Kardangelenk aufweisenden Kurbel gegeneinander verdrehbar sind. Alternativ kann der mechanische Antrieb aus einem Kniehebel bestehen, von dem ein Kniehebelglied über das Kniehebelgelenk hinaus verlängert und dort als Handhabe ausgebildet ist. Der in der DE-C 198 42 844 beschriebene Gegenstand ermöglicht ein Anheben des Daches von Nutzfahrzeugaufbauten um etwa 40 cm. Im Hinblick auf eine optimale Ausnutzung der gesamten Laderaumhöhe bzw. eine geringe Überschreitung derselben wird eine Hubhöhe von 40 cm nicht immer als ausreichend angesehen.

Ziel des Erfindungsgegenstandes ist es daher, die in der DE-C 198 42 844 beschriebene Vorrichtung dahingehend weiterzubilden, dass, ohne den konstruktiven Aufbau der Vorrichtung an sich in Frage zu stellen, ein mechanischer Antrieb bereitgestellt wird, mit welchem auf einfache und preiswerte Weise ein erweitertes Anheben des Dachs eines Nutzfahrzeugaufbaus realisierbar ist.

Dieses Ziel wird erreicht durch eine Vorrichtung zum Heben und Senken eines insbesondere auf Eckrungen abgestützten Dachs eines Nutzfahrzeugaufbaus, mit einer am oberen Ende der zugehörigen Runge befestigten senkrechten Führung, in der ein mit einem Dämpfungsglied zusammenwirkendes Hubglied mit Dachanbindung auf und ab beweglich geführt ist, wobei ein mechanischer Antrieb im unteren Rungenbereich vorgesehen und mit dem Hubglied mittel- oder unmittelbar verbunden ist sowie zumindest Teile des mechanischen Antriebes aus einer eine Grundstellung bildenden Anheb-/Absenkposition in mindestens eine zusätzliche Anhebposition verlagerbar sind.

Vorteilhafte Weiterbildungen des Erfindungsgegenstandes sind den Unteransprüchen zu entnehmen.

Das Dämpfungsglied ist vorteilhafterweise als Gasdruckfeder ausgebildet, die von ihrer Kraft her so ausgelegt ist, dass sie in der Lage ist, das Gewicht des anzuhebenden Dachs des Nutzfahrzeugaufbaus weitestgehend auszugleichen, so dass die Bedienperson ohne größeren Kraftaufwand den Handhebel des Kniehebels aus einer unteren Rastposition in eine obere Rastposition bewegen kann. Alternativ können natürlich auch andersartige Dämpfungsglieder, beispielsweise Hydraulikzylinder, zum Einsatz gelangen.

Diese Art des Bewegungsablaufes beim Anheben und Absenken des Dachs eines Nutzfahrzeugaufbaus ist auch durch den Gegenstand gemäß DE-C 198 42 844 auch möglich, wobei hier lediglich der bereits angegebene Hubweg durch Schwenken des Handhebels um eine stationäre Schwenkachse realisierbar ist. Da beim Stand der Technik lediglich eine definierte nicht veränderliche Schwenkposition gegeben ist, kann ohne konkrete technische Modifizierung ein weiteres Anheben des Dachs des Nutzfahrzeugaufbaus nicht herbeigeführt werden.

Der Erfindungsgegenstand macht sich den Vorteil zu Nutze, dass das insbesondere als Gasdruckfeder ausgebildete Dämpfungsglied das Gewicht des Dachs des Nutzfahrzeugaufbaus weitestgehend kompensiert, so dass der mit einem abgeflachten Lagerbolzen versehene Handhebel im Bereich der Handhebelkonsole, respektive eines Erweiterungselementes, aus der Grundposition heraus in mindestens eine erste Anhebposition verlagert werden kann. Der Abstand des durch Aufnahmeöffnungen für den Lagerbolzen gebildeten Handhebellagers definiert die jeweilige neue Hubhöhe des Dachs des Nutzfahrzeugaufbaus. Das Anheben dient einerseits der optimalen Ausnutzung der Laderaumhöhe und andererseits der Ausweitung der gegebenen Laderaumhöhe des Nutzfahrzeugaufbaus innerhalb tolerierbarer Grenzen, so dass auch ein Unterfahren von Brücken ohne Beschädigungen des Nutzfahrzeugaufbaus möglich ist.

Die Grundstellung ist hierbei so ausgelegt, dass ein Schwenken des Handhebels aus einer unteren vertikalen Rastposition in eine obere vertikale Rastposition möglich ist, während ein Schwenken des Handhebels im Bereich der ersten oder jeder weiteren Anhebposition ausschließlich nach unten möglich ist. Es ist sichergestellt, dass ausschließlich im unteren Rungenbereich verstellbare Rastelemente zur Arretierung des Handhebels gegeben sind, während im oberen Bereich eine ausschließlich stationäre Einrasteinrichtung angeordnet ist. Die unteren Rastelemente sind variabel an den jeweiligen Abstand der im Bereich der Handhebelkonsole, respektive den Erweiterungselementen, vorhandenen Aufnahmeöffnungen für den Lagerbolzen des Handhebels anpassbar, wobei ein entsprechendes Lochbild zur variablen Aufnahme der unteren Rastelemente rungenseitig vorgesehen ist.

Der Erfindungsgegenstand ist anhand eines Ausführungsbeispiels in der Zeichnung dargestellt und wird wie folgt beschrieben. Es zeigen:
- Figur 1: Prinzipskizze des mechanischen Antriebes einer Hubeinrichtung zum Anheben des Daches eines Nutzfahrzeugaufbaus;
- Figuren 2 und 3: Prinzipielle Darstellung des mechanischen Antriebes gemäß Figur 1 in verschiedenen Hubpositionen.

Der Erfindungsgegenstand baut auf auf dem in der DE-C 198 42 844 dargestellten Prinzip des Kniehebels als mechanischem Antrieb zum Heben eines insbesondere auf Eckrungen ruhenden Dachs eines Nutzfahrzeugaufbaus.

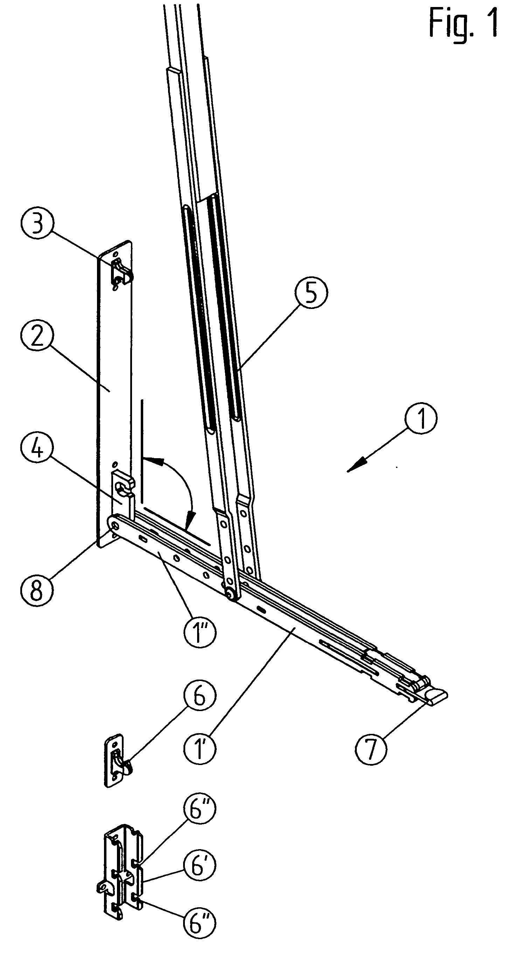

Figur 1 zeigt als Prinzipskizze den als Kniehebel ausgebildeten mechanischen Antrieb 1. Erkennbar ist eine Lagerplatte 2, die an einer hier nicht weiter dargestellten, insbesondere als Eckrunge ausgebildeten Runge anbringbar ist. Die Lagerplatte 2 beinhaltet ein oberes stationär ausgebildetes Rastelement 3. Auf der Lagerplatte 2 ist des weiteren mindestens eine Handhebelkonsole 4 befestigt, an welcher ein Kniehebelglied 1" des Kniehebels 1 anlenkbar ist, das in einem Handhebel 1' ausläuft. Lediglich angedeutet ist ein weiteres Kniehebelglied 5, das bedarfsweise in Analogie zur DE-C 198 42 844 ausgebildet und an entsprechenden Bauteilen des Hubgliedes angelenkt sein kann. Ferner angedeutet ist ein unteres Rastelement 6, das verstellbar an der zugehörigen Runge anbringbar ist. Ein unteres alternatives Rastelement ist mit dem Bezugszeichen 6' versehen. Selbiges ist analog zum oberen Rastelement 3 stationär vorgesehen, weist jedoch beabstandete Rastbereiche 6" auf, deren Funktion im Folgenden näher beschrieben wird. Der Handhebel 1' verfügt im Bereich seines freien Endes über einen entsprechend ausgebildeten Rastmechanismus 7. Der Handhebel 1' ist um seine Schwenkachse 8 um 180° aus dem Bereich des unteren Rastelementes 6 in den Bereich des oberen Rastelementes 3 bewegbar, wobei ein vorgebbarer Hubweg des hier nicht dargestellten Daches eines Nutzfahrzeugaufbaus, beispielsweise 40 cm, realisierbar ist. Zur optimalen Ausnutzung des Laderaumes, respektive zur Erzielung geringer Überhöhen des Nutzfahrzeugaufbaus, beispielsweise 5 bis 10 cm, müssen konstruktive Veränderungen im Bereich des mechanischen Antriebes 1 herbeigeführt werden, die in den folgenden Figuren dargestellt und beschrieben sind.

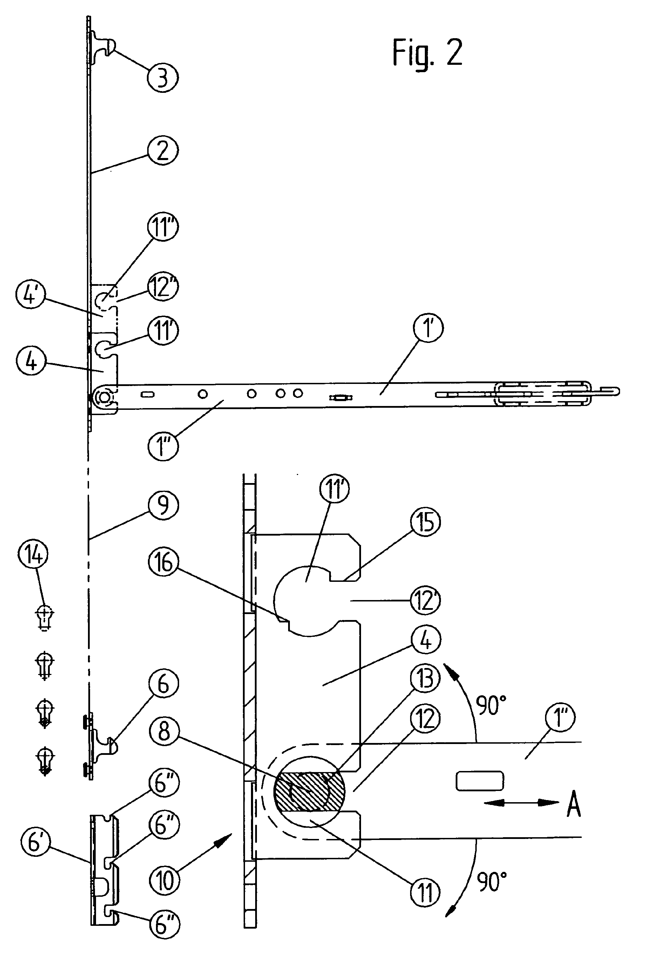

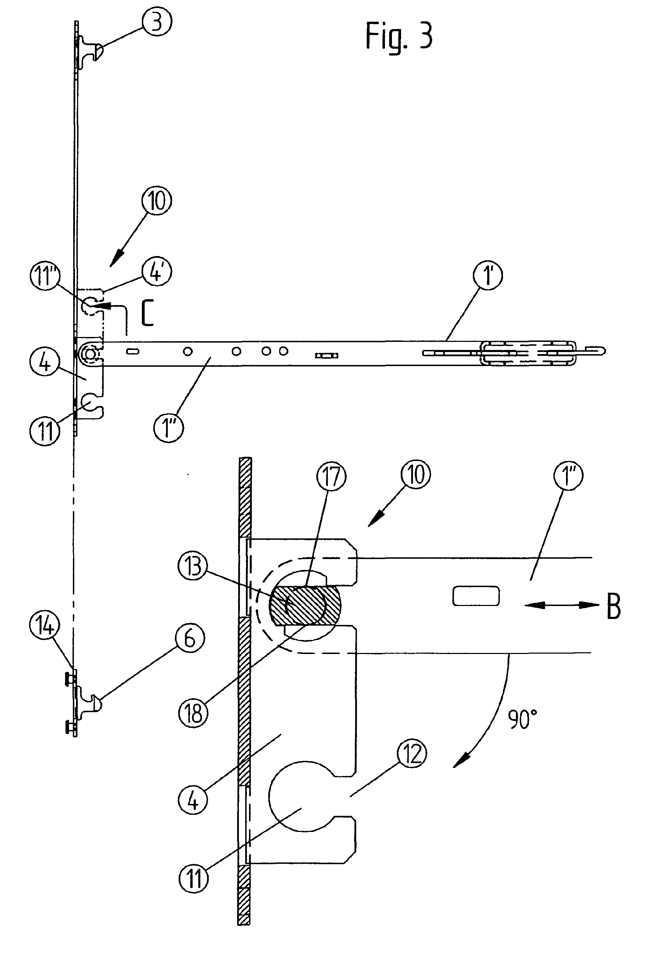

Die Figuren 2 und 3 zeigen als Prinzipskizzen, wie ein weiteres Anheben des Dachs eines Nutzfahrzeugaufbaus herbeigeführt werden kann. Figur 2 zeigt hierbei die untere Grundstellung A des Handhebels 1'/Kniehebelgliedes 1 ". Angedeutet ist eine Eckrunge 9, an welcher die Lagerplatte 2 befestigt ist. Ferner erkennbar ist die Handhebelkonsole 4 sowie ein Erweiterungselement 4'. Die Handhebelkonsole 4, respektive das Erweiterungselement 4', sind mit Handhebellager 10 bildenden Aufnahmeöffnungen 11,11',11" versehen. Eine jede Aufnahmeöffnung 11,11',11" ist handhebelseitig mit einem Einschnitt 12,12',12" versehen. Das Kniehebelglied 1" weist handhebelkonsolenseitig einen abgeflachten Lagerbolzen 13 auf, der in der Grundstellung A in den Einschnitt 12 einführbar und um seine Schwenkachse 8 beweglich ist. Dargestellt ist die horizontale Position, in welcher das, beispielsweise als Gasdruckfeder ausgebildete, hier nicht dargestellte Dämpfungsglied das Gewicht des Daches des Nutzfahrzeugaufbaus weitestgehend kompensiert, so dass ein Kräftegleichgewicht gegeben ist, das es erlaubt, dass der Handhebel 1'/ das Kniehebelglied 1" selbsttätig in dieser horizontalen Position verbleibt. Durch Pfeile sind die jeweiligen Bewegungsmöglichkeiten des Handhebels 1' angedeutet. Durch Schwenken des Handhebels 1' um 90° nach unten kann einerseits das Dach abgesenkt und andererseits der Handhebel 1' im Bereich des unteren Rastelementes 6 verriegelt werden. Angedeutet ist ein mögliches Lochbild 14, das im unteren Teil der zugehörigen Eckrunge 9 eingearbeitet ist und zur variablen Verstellung des unteren Rastelementes 6 dient. Wird der Handhebel 1' aus der unteren Rastposition, respektive seiner dargestellten Horizontalposition, um 90° nach oben geschwenkt, kann einerseits das Dach um einen vorgebbaren Hubweg weiter angehoben und andererseits der Handhebel 1' im Bereich des oberen Rastelementes 3 verriegelt werden. Ferner dargestellt ist das alternative, starr angeordnete, untere Rastelement 6', das in diesem Beispiel zwei Rastbereiche 6" aufweist, die von ihrem Abstand her dem Abstand der Aufnahmeöffnungen 11, 11' entsprechen. Während die untere Aufnahmeöffnung 11 ein freies Bewegen des abgeflachten Lagerbolzens 13 ermöglicht, ist dies im Bereich der Aufnahmeöffnungen 11' sowie 11" nicht möglich. Hier werden Anschlagflächen 15,16 für die gegenüberliegenden abgeflachten Flächenbereiche 17,18 des Kniehebelgliedes 1" gebildet. Während Figur 2 die untere Grundstellung A des Handhebels 1' zeigt, ist in Figur 3 eine erste zusätzliche Anhebposition B des Handhebels 1' dargestellt. Kompensiert das Dämpfungsglied weitestgehend die Last des Daches des Nutzfahrzeugaufbaus kann die Bedienperson den Handhebel 1'/das Kniehebelglied 1" zu Verstellzwecken aus der mit dem Einschnitt 12 versehenen unteren Aufnahmeöffnung 11 der Handhebelkonsole 4 herausziehen und den Lagerbolzen 13 über den Einschnitt 12' in die Aufnahmeöffnung 11' der Handhebelkonsole 4 einbringen. Dadurch, dass der abgeflachte Lagerbolzen 13 nun an den Anschlagflächen 15,16 anliegt, ist eine Schwenkbewegung nach oben ausgeschlossen. Somit ist der Handhebel 1' ausschließlich nach unten schwenkbar und kann im Bereich des in einem angepaßten Lochbild 14 eingebrachten Rastelementes 6, respektive dem alternativen Rastelement 6', arretiert werden. Durch diese Maßnahme ist sichergestellt, dass ein unbeabsichtigtes weiteres Anheben des Daches des Nutzfahrzeugaufbaus sicher vermieden wird, was unter Umständen beim Unterfahren von Brücken zu erheblichen Problemen führen könnte. Da das Rastelement 3 stationär auf der Lagerplatte 2 angeordnet ist, wäre eine Arretierung des Handhebels 1' in der oberen Rastposition ohnehin nicht möglich.

In den Figuren 2 und 3 angedeutet sind Erweiterungselemente 4' mit zugehörigen Handhebellager 10 bildenden Aufnahmeöffnungen 11" für den Lagerbolzen 13, sofern eine weitere Anhebung des Daches des Nutzfahrzeugaufbaus in eine weitere Anhebposition C notwendig erscheint. Das Verstellprinzip des Handhebels 1' erfolgt in analoger Weise, wie in den Figuren 2 und 3 dargestellt und beschrieben.

### Bezugszeichenliste

- 1: mechanischer Antrieb
- 1': Handhebel
- 1": Kniehebelglied
- 2: Lagerplatte
- 3: oberes Rastelement
- 4: Handhebelkonsole
- 4': Erweiterungselement
- 5: weiteres Kniehebelglied
- 6: unteres Rastelement
- 6': unteres alternatives Rastelement
- 6": Rastbereich
- 7: Rastmechanismus
- 8: Schwenkachse
- 9: Eckrunge
- 10: Handhebeilager
- 11: Aufnahmeöffnung
- 11': Aufnahmeöffnung
- 11": Aufnahmeöffnung
- 12: Einschnitt
- 12': Einschnitt
- 12": Einschnitt
- 13: Lagerbolzen
- 14: Lochbild
- 15: Anschlagfläche
- 16: Anschlagfläche
- 17: Flächenbereich
- 18: Flächenbereich
- A: Grundposition
- B: erste Anhebposition
- C: weitere Anhebposition

## Patentansprüche

1. Vorrichtung zum Heben und Senken eines insbesondere auf Eckrungen (9) abgestützten Daches eines Nutzfahrzeugaufbaus, mit einer am oberen Ende der zugehörigen Runge (9) befestigten senkrechten Führung, in der ein mit einem Dämpfungsglied zusammenwirkendes Hubglied mit Dachanbindung auf und ab beweglich geführt ist, wobei ein mechanischer Antrieb (1) im unteren Rungenbereich vorgesehen und mit dem Hubglied mittel- oder unmittelbar verbunden ist sowie zumindest Teile (1') des mechanischen Antriebes (1) aus einer eine Grundstellung (A) bildenden Anheb-/Absenkposition in mindestens eine zusätzliche Anhebposition (B,C) verlagerbar sind.

2. Vorrichtung nach Anspruch 1, **dadurch gekennzeichnet, dass** der mechanische Antrieb (1) eine mit der zugehörigen Runge (9) verbindbare Lagerplatte (2) umfasst, auf welcher mindestens eine Handhebelkonsole (4) vorgesehen ist, die mindestens zwei Handhebellager (10) bildende Aufnahmeöffnungen (11,11',11") für ein verstellbares Kniehebelglied (1") eines damit zusammenwirkenden Handhebels (1') des mechanischen Antriebes (1) aufweist, wobei das Kniehebelglied (1")/ der Handhebel (1') aus der Grundstellung (A) in die jeweilige Anhebeposition (B,C) verlagerbar ist.

3. Vorrichtung nach Anspruch 1 oder 2, **dadurch gekennzeichnet, dass** die Handhebelkonsole (4), respektive mindestens ein Erweiterungselement (4'), grundstellungsseitig das Handhebellager (10) beinhaltet, das durch eine im wesentlichen kreisförmig ausgebildete Ausnehmung (11,11',11") gebildet ist, die zur Aufnahme und Führung eines mit einem abgeflachten schwenkbaren Lagerbolzen (13) bestückten Endes des Kniehebelgliedes (1") mit einem entsprechend dimensionierten Einschnitt (12,12',12") versehen ist.

4. Vorrichtung nach einem der Ansprüche 1 bis 3, **dadurch gekennzeichnet, dass** das im Bereich des unteren Handhebellagers (10) geführte Kniehebelglied (1") um die Schwenkachse (8) des Lagerbolzens (13) aus einer unteren eingerasteten vertikalen Absenkposition in eine obere eingerastete vertikale Anhebposition schwenkbar ist.

5. Vorrichtung nach einem der Ansprüche 1 bis 4, **dadurch gekennzeichnet, dass** die Handhebelkonsole (4), respektive das Erweiterungselement (4') in jeder weiteren Anhebposition (B,C) eine mit Anschlagflächen (15,16) für die abgeflachten Bereiche (17,18) des Lagerbolzens (13) versehene Aufnahmeöffnung (12',12") aufweist, so dass ein Absenken des Daches des Nutzfahrzeugaufbaus möglich, ein weiteres Anheben desselben in dieser Position hingegen verhindert ist.

6. Vorrichtung nach einem der Ansprüche 1 bis 5, **dadurch gekennzeichnet, dass** im Bereich der zugehörigen Runge (9) untere, in Abhängigkeit von der Anzahl der zusätzlichen Anhebebereiche (B,C), bedarfsweise verstellbare Rastelemente (6,6') vorgesehen sind, die sowohl in der Grundposition (A) als auch in jeder weiteren Anhebposition (B,C) mit dem im freien Endbereich des Handhebels (1') vorgesehenen Rastmechanismus (7) in Wirkverbindung bringbar sind.

7. Vorrichtung nach einem der Ansprüche 1 bis 6, **dadurch gekennzeichnet, dass** bei einem starr ausgebildeten unteren Rastelement (6') selbiges mit Rastbereichen (6") versehen ist, die von ihrem Abstand her demjenigen Abstand der Aufnahmeöffnungen (11,11',11") der Handhebelkonsole (4) entsprechen.

8. Vorrichtung nach einem der Ansprüche 1 bis 7, **dadurch gekennzeichnet, dass** im Bereich der zugehörigen Runge (9) ein oberes stationäres Rastelement (3) zur Verlagerung des im freien Endbereich des Handhebels (1') vorgesehenen Rastmechanismus ausschließlich im Bereich der Grundposition (A) vorgesehen ist.

9. Vorrichtung nach einem der Ansprüche 1 bis 8, **dadurch gekennzeichnet, dass** die zugehörige Runge (9) mit einem vorgebbaren Lochbild (14) versehen ist, dessen Lochabstand der bzw. den zusätzlichen Anhebposition(en) (B,C) für den Handhebel (1') entspricht.
